# EUROPEAN PATENT SPECIFICATION

(11) **EP 0 728 065 B1**
(45) Date of publication and mention of the grant of the patent: **07.01.1998**
(21) Application number: 95900231.2
(22) Date of filing: 09.11.1994
(51) Int. Cl.: B29C 37/00, B29C 45/00, B29C 45/16

(54) **A METHOD OF MOULDING AND A MOULDING FORMED BY SUCH A METHOD**
VERFAHREN ZUM FORMEN UND MIT DIESEM VERFAHREN HERGESTELLTES FORMTEIL
PROCEDE DE MOULAGE ET PIECE MOULEE OBTENUE SELON CE PROCEDE

(30) Priority: 11.11.1993 GB 9323339
(43) Date of publication of application: 28.08.1996
(73) Proprietor: ROVER GROUP LIMITED, Warwick CV34 6RG (GB)
(72) Inventor: EASTERLOW, Ronald, Arthur, Coventry CV5 7AT (GB); SMITH, Gordon, Frederick, Warwick CV34 6QA (GB)
(74) Representative: Farrow, Robert Michael
(86) International application number: GB9402464
(87) International publication number: WO9513177

(56) References cited:
- WO-A-93/06981
- WO-A-93/17855
- WO-A-94/06611
- WO-A-94/06612
- DE-A- 2 461 925
- PATENT ABSTRACTS OF JAPAN vol. 12, no. 442 (M-766) (3289) 21 November 1988 & JP,A,63 173 616 (SUZUKI MOTOR CO) 18 July 1988
- AUTOMOTIVE ENGINEER, vol.19, no.2, April/May 1993, BURY ST. EDMUNDS GB pages 28 - 29 'Vehicle and systems manufacturers are increasingly making it with plastics'
- PATENT ABSTRACTS OF JAPAN vol. 10, no. 77 (M-464) (2134) 26 March 1986 & JP,A,60 219 035 (HONDA GIKEN KOGYO) 1 November 1985

## Description

The invention relates to a method of moulding and a moulding formed by such a method and is particularly, but not exclusively, concerned with a method of moulding a component for a motor vehicle.

Hitherto, it has been proposed to produce a vehicle body panel in a mould by initially injecting a plastics substrate material into the mould, subsequently opening the mould slightly, introducing into an injection moulding machine a low viscosity thermosetting liquid paint having a viscosity of, for example, 8500 to 12500 centipoise at 25° C and injecting the liquid paint so that it flows between the injection moulded plastics substrate and the adjacent surface of the mould. As an alternative, it has also been proposed to inject such a liquid paint between the previously injected plastics material and the adjacent mould surface without slightly opening the mould, such injection taking place before the injected plastics material has cured whereby the material can compress slightly as the paint is forced into the mould. Injection of a coating material formed from liquid plastics supplied to an injection moulding machine to provide a finish on a component is also disclosed in GB-A-2 039 246 and GB-A2 163 993.

Control of flow, pressure and cure of the paint during injection thereof are important to its surface finish and overall thickness integrity. Injection of liquid paint across the surface of the plastics substrate material is somewhat difficult to control and, therefore, it is difficult to obtain an even surface finish. Moreover, in the case of liquid paints which have a fast curing mechanism such that the moulding can be removed in a solid condition from the mould in a short time, the curing mechanism continually changes the rheology during injection, hence altering the controlling conditions.

In-mould coating of substrates using powdered plastics paint has also been proposed hitherto but involves the introduction of the paint in its powder form into the mould where it is heated to a melt temperature to form a film on the surface of the mould. The substrate is then placed in the mould so the paint becomes bonded to the surface of the substrate to form a finish. An example of such a method can be found in GB-A-1 420 867. Such a method is slow as it involves in-mould heating of the powder. Also, with a moulding the size of a typical vehicle body panel, eg a vehicle front wing, it would not be possible with such a method to obtain an even surface finish and the panel would require subsequent painting outside the mould.

An object of the present invention is to provide an improved method of moulding and a moulding formed by such a method.

According to one aspect of the invention there is provided a method of moulding by injection comprising providing an injection moulding machine, introducing into the injection moulding machine a coating material in the form of plastics paint which includes a thermoplastic or thermosetting polymer, a colouring material, and an antioxidant, providing a mould, providing in the mould a part to be coated with the paint and causing the injection moulding machine to inject the paint between the said part and an adjacent surface whereby the paint forms a coating on the surface of the part to provide a finish, characterised by utilising a paint formed by a powder paint manufacturing process, introducing the paint into the injection moulding machine and melting or softening the paint in the injection moulding machine so as to bring the paint into a form suitable for injection.

By injecting such a paint which has, when in an injectable form, a viscosity considerably higher than that of liquid paint, it has been found that the flow and viscosity profile of the material over the surface of the said part is more easily controllable with the temperature and pressure of injection and a surprisingly good paint finish is obtained. The paint cure time can be controlled by controlling mould and/or injection temperature and, if desired, curing can be carried out outside the mould thus not affecting paint viscosity during injection. In fact, in accordance with the invention, it has been found possible with a suitable mould to obtain what is known as an automotive class A finish which is highly desirable as post-mould paint dipping or paint spraying of the component is not required.

The paint may also include one or more substances selected from finely divided metallic materials, finely divided pearlescent materials and UV stabilizers. Preferably, the paint includes at least one polymer compatible with the material from which the part is formed.

Where the said part is formed from a thermoplastic material, eg polypropylene, the paint may include a thermoplastic reversibly cross-linkable polymeric material, eg an ionomer.

A first application of the method may include producing the said part in the mould by injecting into the mould a thermoplastic or thermosetting plastics material and injecting the paint after the plastics material has at least partially cured.

A second application of the method may include introducing into the mould a thermosetting plastics material of sheet-like form or dough-like consistency and pressing the material in the mould to form the said part. The mould may be made in at least two sections and the method may include pressing the said uncured thermosetting plastics material in the mould to form the said part by urging the two mould sections together, eg under a clamping load. The method may include using heat from the mould to assist curing of the thermosetting plastics material.

A third application of the method may include introducing into the mould sheets of thermoplastics mouldable material and pressing the sheets in the mould to form the said part. The mouldable thermoplastics material may comprise a glass mat filled polypropylene sheet (GMT). The method may include heating the sheets prior to introducing the sheets into the mould to soften the sheets and thereby bring them to a mouldable condition, and then allowing the sheets to solidify or cure at least partially prior to injecting the paint to coat the part.

The mould may be formed in at least two sections and the sheets of mouldable material are preferably pressed in the mould to form the part by urging the two mould sections together, eg under a clamping load.

A fourth application of the method may include providing the part in the mould as a metal part onto which the paint is injected. The metal part may be formed to shape in the mould prior to injecting the paint. The mould may be formed from at least two sections and the metal may be pressed in the mould to form the said part by urging the two mould sections together, eg under a clamping load.

The paint referred to herein before may be a polymeric paint with substantially thermosetting properties which will pass through a plastic phase as a result of applying heat thereto and the method involves injecting the paint between the said part and the adjacent surface while the paint is in such a plastic phase. The thermosetting plastics paint may either begin to cure as a result of heat applied thereto in the injection moulding machine or by heat applied thereto by the mould or at least said adjacent surface. Alternatively the coated part may be removed from its mould and heat may be applied at least to the paint coating thereon to complete the cure thereof.

The adjacent surface may be a surface of the said mould and in order to reduce the pressure required to inject the paint between the said part and the adjacent surface of the mould, the mould sections may be opened slightly prior to doing so. Opening of the mould may be facilitated by relieving a clamping load normally used to hold the two mould sections together.

According to another aspect of the invention, there is provided a moulding made by a method in accordance with the first said aspect of the invention or any of the consistory clauses related thereto.

Such a moulding may comprise a component of a vehicle, the paint preferably providing an automotive class A finish.

A method of moulding in accordance with the invention and a moulding made by such a method will now be described by way of example with reference to the accompanying drawings in which:-
Fig 1 is a diagrammatic cross-section through a two-section mould showing a plastics material injected therebetween to form a part to be coated with paint,
Fig 2 is a view of the mould shown in Fig 1 open slightly so as to define a gap between a surface of the moulded part and an adjacent surface of the mould,
Fig 3 shows the mould of Figs 1 and 2 and a paint material injected between the said part and the adjacent surface of the mould,
Fig 4 is a cross-section through a mould similar to that shown in Figs 1 to 3 with its sections spaced apart and a thermosetting dough-like plastics material placed therebetween,
Fig 5 shows the mould of Fig 4 closed so as to cause the dough-like material to flow and fill the space between the mould sections.
Fig 6 shows the mould sections open slightly to define a gap between the moulded part and the adjacent mould surface,
Fig 7 shows the mould of Figs 4 to 6 with a paint material injected between the moulded part and the adjacent surface of the mould,
Fig 8 is a cross-section through a two-section mould showing heated sheets of thermoplastics material positioned therebetween,
Fig 9 shows the mould sections closed and the thermoplastics material filling the space between the mould sections.
Fig 10 shows the mould sections open slightly to define a gap between the moulded part and an adjacent surface of the mould,
Fig 11 shows the mould of Figs 8 to 10 with paint injected into the gap between the moulded part and the adjacent surface of the mould,
Fig 12 is a cross-section through a mould similar to that shown in Fig 3 with its sections spaced apart and a sheet of metal placed therebetween,
Fig 13 shows the mould sections closed with the sheet of metal pressed to shape by the mould,
Fig 14 shows the mould sections open slightly so as to define a gap between the metal part and an adjacent surface of the mould
Fig 15 shows the mould of Figs 12 to 14 and paint injected into the gap between the metal part and an adjacent surface of the mould,
Fig 16 is a cross section through a mould showing a part formed therein by the methods shown in Figures 1 to 3,
Fig 17 is a cross section of the lower mould section of Fig 16 and the part formed in Fig 16 positioned in an alternative upper mould section to define a space for receiving injected paint,
Fig 18 is a diagrammatic cross section through a mould which comprises a movable section defining two female mould surfaces for co-operation with a single lower mould section in order to produce a space for subsequent paint injection and
Fig 19 is a perspective view of a vehicle bonnet.

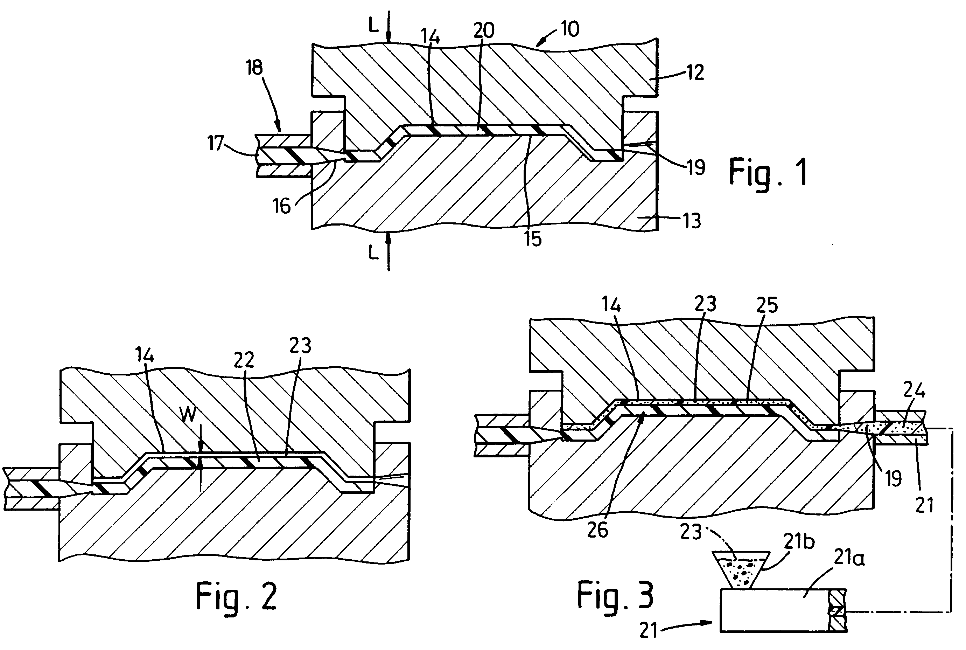

In Figs 1 to 3, the mould 10 comprises upper and lower sections 12, 13 as viewed in the drawings. The first section 12 defines a female mould surface 14 of complementary shape to a male mould surface 15 of the lower mould section 13. The lower mould section 13 is formed with an injection passage 16 through which plastics materials 17 is injected from a machine indicated generally at 18. The lower mould section 13 is also formed with a further passage 19 through which a paint material can be injected as described hereinafter.

With the mould sections 12, 13 in the position shown in Fig 1, a space 20 is defined between the two mould sections which receives plastics material 17 injected from the machine 18 as shown. The relative positioning of the mould sections 12, 13 may be controlled by suitable stops (not shown) and, during injection, the mould sections are held together by a clamping load L.

The plastics material 17 can either be a thermosetting material eg phenolic or epoxy resin or a thermoplastics material eg ABS or polypropylene. In the case of a thermosetting material, heat applied to the material in the machine 18 will be sufficient to cause the onset of curing of the material after injection into the space 20. Moreover, it is envisaged that at least the mould sections 12 will be heated to assist curing of the plastics 17 following injection. As an example, the material 17 may be Epoxy or Vinylester, and injected at a temperature of approximately 60-120° C. The mould 10 will be maintained at a temperature of around 120° C and curing of the material 17 takes place over a period of approximately 180 seconds.

Where the material 17 is a thermoplastics material, the mould 10 will be maintained at a temperature cooler than the injection temperature of the material 17 to aid the solidification or curing of a thermoplastics material. As an example, the thermoplastics material 17 may be polypropylene and injected at a temperature of 200° C. The mould 10 may be maintained at a temperature of 80° C and solidification of the injected material 17 is likely to take around 60 seconds.

The cured material 17 forms a part 22 as shown in Fig 2. After curing, the mould sections 12, 13 are separated slightly to define a small gap 23 between the part 22 and the adjacent surface 14 of the mould section 12, the width of the gap 23 is indicated at W and may be approximately 0.15 mm. The dimension is shown exaggerated in the drawings.

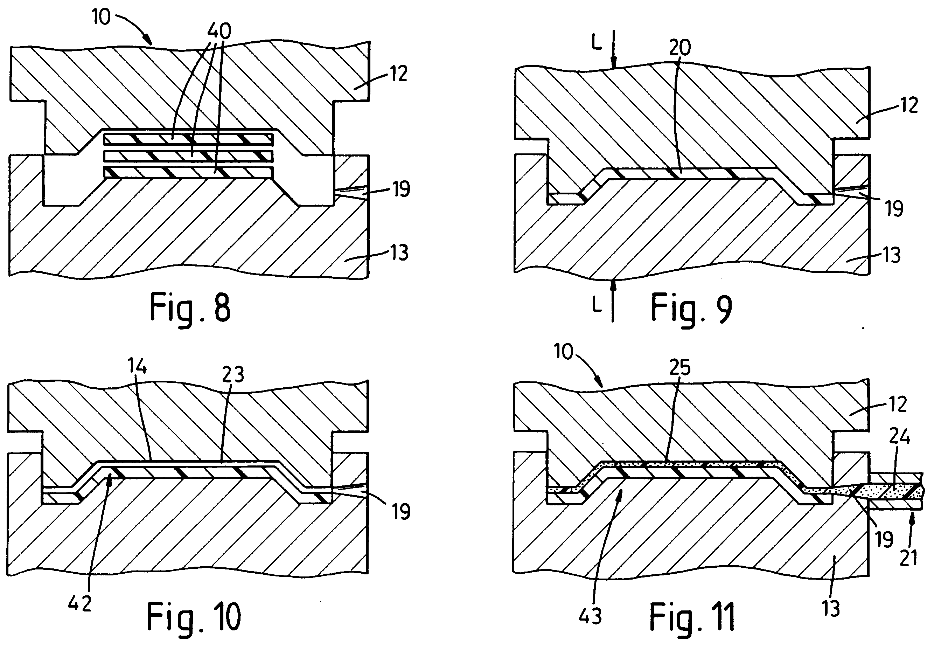

An injection moulding machine 21 (Fig 3) has a barrel 21a to which paint 24 is fed from a hopper 21b. The paint 24 in the hopper 21b is in the form of chips, particles, granules, pellets, powder or other suitable form and is produced by a thermosetting/thermoplastic powder paint manufacturing process. In such a process, the paint components (such as those described below with respect to Figs 8 to 11) are mixed together and then extruded, for example, in the form of sheets or pellets. Where the paint is extruded in the form of sheets, the sheets may be broken or cryogenically ground into chips, powder or the like. If granules or pellets are required, the paint will normally be extruded in the form of thin rods which are chopped into granules or pellets. Such manufacturing processes for the production of plastics powder paint are well known and will not be described further. The pellets, chips, powder or the like can be introduced into the hopper 21b directly for melting or softening in the injection moulding machine 21 to bring the paint into an injectable high viscosity condition.

Once the gap 23 has been defined, the melted or softened paint 24 is injected by the machine 21 through the passage 19 and between the part 22 and the adjacent surface 14 of the mould section 12 so as to fill the gap 23. The paint 24 thereby forms a coating 25 on the part 22 of depth W. The heated mould 10 assists flow of the paint 24 through the gap 23 and a surprisingly even paint finish is obtained. The surface 14 may be a chromium polished finish or the mould section 12 may be stainless steel having the surface 14 formed with a polished or other suitable finish to provide the required external finish on the coating 25.

Where the material 17 is a thermosetting material, the paint 24 is preferably a thermosetting material which, when heated, passes through a thermoplastic phase and injection of the paint 24 takes place while the paint is in its plastic condition. Heat applied to the material 24 in the machine 21 is sufficient to cause at least the onset of curing of the injected paint material and at least the mould sections 12, 13 are maintained in the Fig 3 position for a time sufficient for the coating 25 to cure at least partially. Where the mould 10 is heated, heat from the mould will itself assist in curing the coating 25. After curing of the coating is completed, the mould halves are separated and the completed component indicated at 26 is removed from the mould.

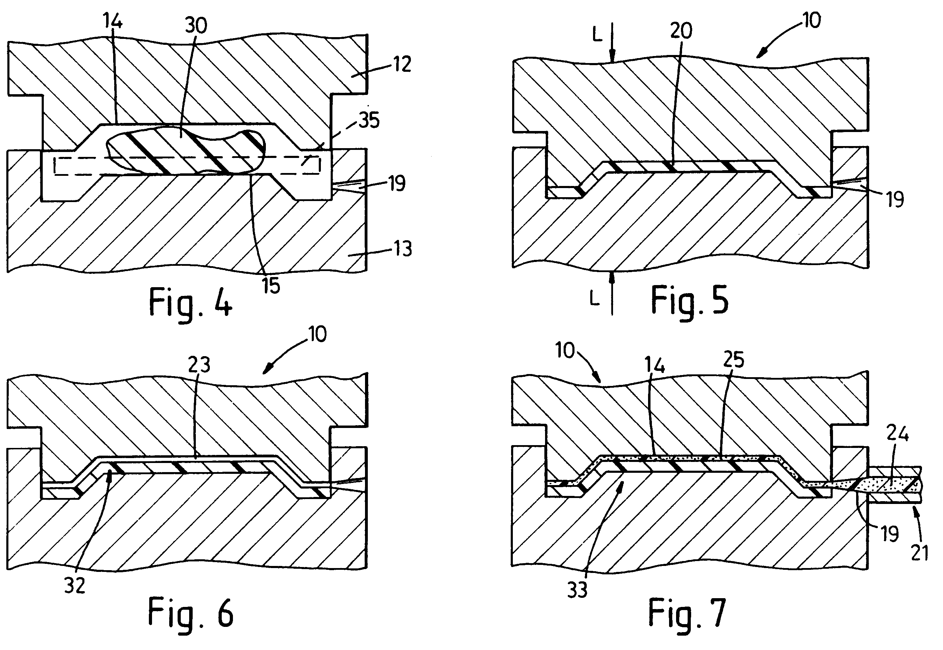

In Figs 4 to 7, parts corresponding to parts shown in Figs 1 to 3 carry the same reference numerals.

In Fig 4, a piece of dough-like thermosetting plastics material 30 (such as Dough Moulding Compound (DMC) available from BIP Chemicals Limited, Popes Lane, Oldbury, England) is placed between the mould sections 12, 13 which are heated to a temperature sufficient to cause the onset of curing of the thermosetting plastics material eg 140° C. The quantity of the material 30 is such that when the mould is closed under load L as shown in Fig 5 the dough-like material 30 will substantially fill the space 20. The mould sections 12, 13 are left in the Fig 5 position so that the material 30 can substantially cure to form a part 32. The mould sections 12, 13 are then separated slightly as shown in Fig 6 to define a gap 23. A plastics paint 24 formed as described with respect to Figs 1 to 3 is then injected from the machine 21 through the passage 19 so as to coat the part 32 and fill the gap 23 to form a coating 25. The paint 24 is a thermosetting material which, when heated, passes through a plastic phase and is injected through the passage 19 whilst in a plastic condition. Heat applied by the injection moulding machine 21 is sufficient to cause onset of curing of the paint 24 and the mould sections 12, 13 are left in the Fig 7 position for a sufficient length of time to enable further curing of the paint coating 25 to take place. The mould sections 12, 13 are then separated to enable the component indicated at 33 to be removed from the mould 10 and fully cured.

Typical curing time for the material 30 will be around 120 seconds with the mould 10 at 150-160° C and a typical curing time for the paint 24 with the mould 10 at that temperature will be around 120 seconds for onset of cure with postcure outside the mould of 600 seconds.

Instead of using a dough-like material 30, a thermosetting sheet moulding compound 35 known as SMC can be placed in the mould as shown in broken lines in Fig 4. The sheet 35 will spread so as to fill the space 20 when the mould sections 12, 13 are moved to the Fig 5 position. After the sheet has substantially cured, the steps shown in Figs 6 and 7 can follow.

With reference to Figs 8 to 11, parts corresponding to parts shown in Figs 1 to 3 carry the same reference numerals.

In Fig 8, sheets 40 of glass mat filled polypropylene (GMT) are heated to approximately 190° C and placed between the mould sections 12, 13. The mould sections 12, 13 will be cold or at least substantially cooler than the heated sheets 40 for example 100° C. The mould sections are then moved to the Fig 9 position under load L so as to cause the sheets 40 to flow outwardly and conform to the mould and substantially fill the space 20 between the mould sections. The temperature to which the sheets 40 are heated also causes the sheets to bond together homogeneously. Once the formed thermoplastic sheets have substantially cured to form a part 42, the mould sections 12, 13 are opened slightly so as to define a gap 23 between the part 42 and the adjacent mould surface 14. A thermoplastic paint 24 formed as described with respect to Figs 1 to 3 is then injected through the passage 19 so as to coat the part 42 and fill the gap 23.

A suitable thermoplastic paint 24 may be based on a mixture of thermoplastic material such as polypropylene and a concentrate of pigment to provide filling and/or coloration. In general moulding techniques, it is usual for such a material to be dispersed in a bulk polymer to provide a material for moulding having desired qualities. Such a mixture is known in the art as Master Batch. A bulk polymer with the master batch dispersed therein will not exhibit the properties normally required of a paint, in particular the necessary depth of image and hardness/resistance to abrasion. To enable the thermoplastic material/pigment concentrate mixture to provide a paint coating in a method in accordance with the present invention, an additive is combined with the mixture to cause cross linking. A suitable additive is an acrylic-modified polyolefinic ionomer. An ionomer is a thermoplastic material provided with a low degree of cross linking in the solid state by the addition of a metal salt which provides ionic bonds between the polymer chains. By using the cross linking additive, a mould having a smooth surface will enable the paint coating to provide a surface finish having a depth of image and hardness which would not be exhibited by a moulded bulk polymer having the aforesaid mixture dispersed therein. Such a thermoplastic paint material suitable for coating a polypropylene substrate may comprise the following composition:
74.9% polypropylene
20% white pigmentation
0.9% antioxidant
0.2% UV stabilizer
4.0% acrylic-modified polyolefinic ionomer.

Such a paint will have an affinity for GMT.

Other suitable compositions for providing the paint coating are described in WO 94/06612 and WO94/06611 to which the reader is directed and the contents of which are incorporated herein by reference.

Once the paint coating 25 has solidified, the mould sections 12, 13 are then separated to enable the coated moulding indicated at 43 to be removed from the mould 10.

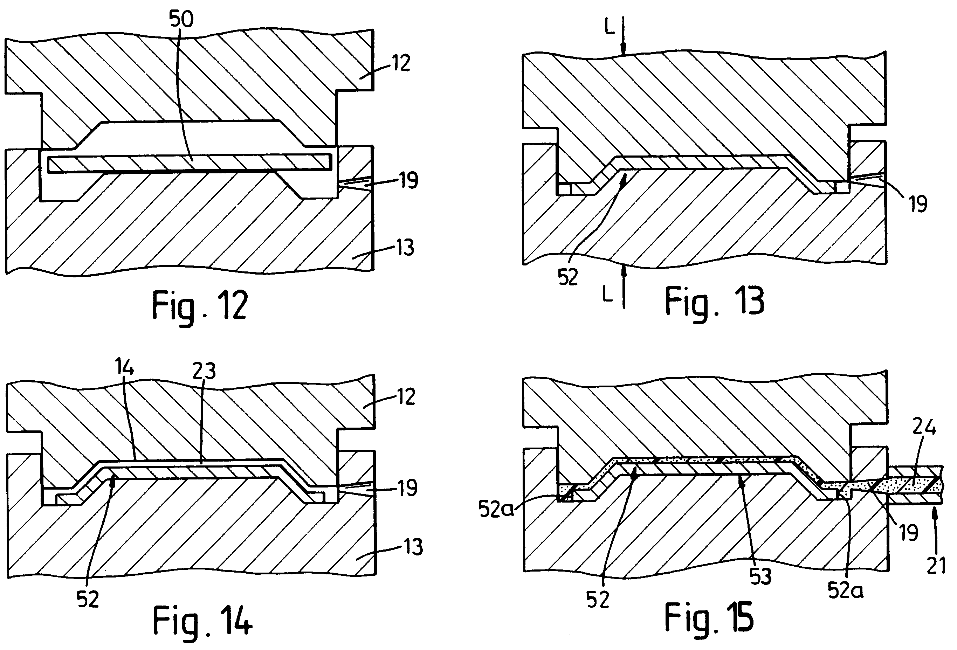

In Figs 12 to 15, parts corresponding to parts shown in Figs 1 to 3 carry the same reference numerals.

In Fig 12, a sheet of metal 50, eg mild steel, is placed between the mould sections 12, 13. The mould sections 12, 13 are then closed under the load L which presses the sheet 50 and causes it to conform to the shape of the mould surfaces 14, 15 to form a part 52. The mould sections 12, 13 are then separated slightly as shown in Fig 14 to define a gap 23 between the part 52 and the adjacent surface 14 of the mould 10. If desired, the metal sheet 50 can be pre-formed in alternative tooling to conform to the shape of the mould and then placed in position in the mould as in Fig 14.

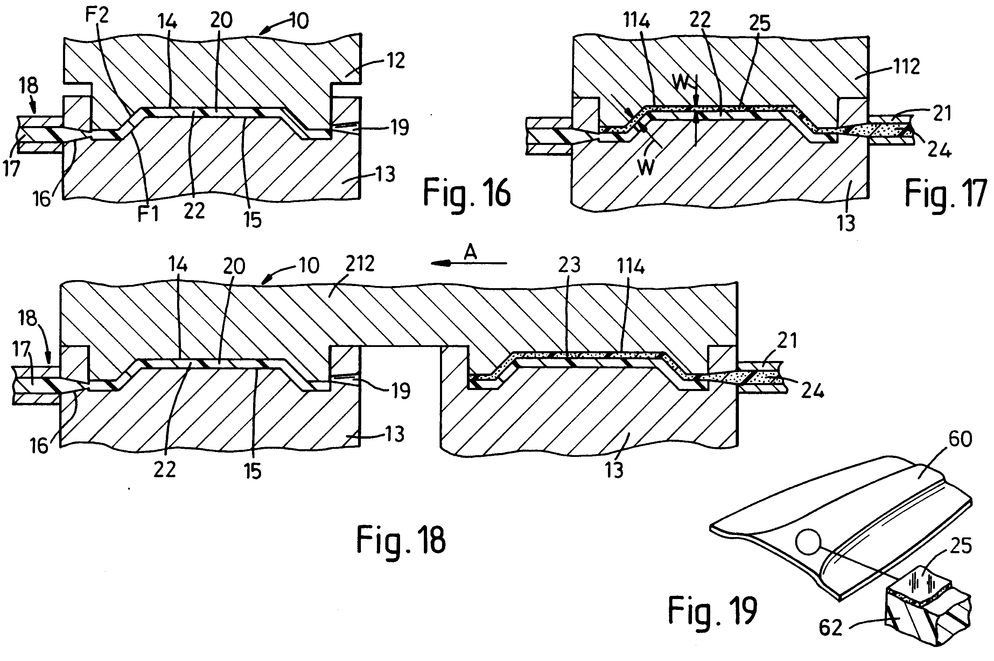

Paint 24 formed as described with respect to Figs 1 to 3 is then injected through passage 19 so as to provide a paint coating 25 on the part 52 and fill the gap 23 as shown in Fig 15. The injected paint 24 also flows around ends 52a of the metal part 52. Flowing around the ends in that way is a substantial improvement on stamped painted metal sheet which produces unpainted edges with no corrosion protection. As for the previous embodiments, the mould sections 12, 13 are left closed sufficiently long for the thermosetting paint 24 to cure at least partially and the mould 10 can then be opened to allow the coated moulding indicated at 53 to be removed.

Where the paint 24 is applied to a thermosetting material in the mould such as polyester, DMC, SMC or resin injection mould (RIM) epoxy, or to metal, a suitable thermosetting plastics paint is preferably used. Interpon UT1410 available from Courtaulds Coatings (Holdings) Limited of Felling Gateshead, Tyne and Wear is suitable for that purpose.

In Figs 1 to 7 where thermosetting materials 17, 30 and 35 are described and in Figs 12 to 15 where sheet metal 40 is used, a thermosetting paint 24 may be of a kind which can be finally cured outside the mould by applying heat thereto. Interpon 1410 is a suitable material for that purpose. The heat applied to the mouldings to cure the paint coating 25 in such a case will not have an adverse effect on the thermoset plastics underlayer or the sheet metal part. Also the finish provided by coating 25 may be improved in that way as the applied heat can cause the paint to flow slightly providing a finish which is not entirely dictated by the quality of the mould surface 14.

The paint 24 will be of a kind such that the initially formed plastics part and the paint material 24 have an affinity for each other.

Where a plastics part is initially formed in the mould, cross-linking can occur between the plastics paint 24 and the plastics part where the plastics part is only partially cured when the paint 24 is injected by the machine 21.

An injection pressure of around 40 bar or higher may be required to inject the paint 24 through the gap 23 to coat the part in the mould where the mould 10 sections 12, 13 are separated to define the gap W. However, it is envisaged that instead of separating the mould halves 12, 13 to define a gap W, the clamping load L used to hold the mould sections 12, 13 together when injecting the paint 24 may be decreased to permit the paint 24 to be injected under high pressure between the part positioned in the mould 10 and the adjacent mould surface. The pressure of the incoming paint 24 can then cause the mould sections 12, 13 to move apart slightly against the reduced clamping load to permit the paint to coat the surface of the part.

It is also envisaged that the clamping load L can be maintained where the part initially produced in the mould is formed from a plastics material and the plastics material is not fully cured prior to the injection of the paint 24. In the latter case, the incoming paint 24 can cause a small amount of compression of the initially formed part to occur to enable the paint to coat the surface of the uncured plastic part.

Reference is now made to Figs 16 and 17 in which parts corresponding to parts shown in Figs 1 to 3 carry the same reference numeral.

Fig 16 shows a mould identical to that shown in Fig 1 where the part 22 is formed by injection. When the mould is opened as in Fig 2, the injected paint layer 23 will have a thickness W between the spaced apart horizontal surfaces of the mould sections 12, 13. However, the distance between the inclined flanks of the mould 22 (indicated at F1 in Fig 16) and the inclined opposite surface F2 of the mould section 12 will be spaced apart by a distance which is smaller than distance W so that the layer of paint covering the flanks will be thinner than that covering the horizontal surfaces of the part 22. Therefore, opening or causing the mould to open to enable the paint 24 to be injected will not produce an even coating of paint over shaped components.

In order to overcome that problem, the mould section 12 is replaced by a mould section 112 which has a female surface 114 shaped such that when the mould section 13 and the part 22 is placed against the mould section 112 as shown in Fig 17, the gap W is constant over the entire surface of the moulded part 22. In that way, the paint 24 is injected between the part 22 and the adjacent surface 14 and will form a coating 25 of even thickness over the part 22.

Fig 18 shows part of an automated moulding system comprising an upper mould section 212 having a female mould surface 14 similar to that of the mould section 12 in Fig 16 and a further female surface 114 similar to that shown in Fig 17. The mould section 13 co-operates with the surface 14 to produce the article 22. The mould section 13 is then lowered and the upper mould section 212 is shifted in the direction of arrow A so that the surface 114 aligns with the part 22. The mould section 13 is then raised into the position shown in Fig 18 so as to define a space 23 between the upper surface of the part 22 and the surface 114. The surface 114 is shaped to define a space 23 which is of constant thickness over the whole of the upper surface of the part 22 and paint 24 is then injected to produce the coating 25. The mould section 13 is then lowered to enable the coated part to be removed.

The method described with respect to Figs 16 and 17 and Fig 18 can be used to produce articles as described with respect to Figs 4 to 15.

It is envisaged that the method in accordance with the invention can be used to form body panels of motor vehicles such as car bonnets, door panels, wings, sills and wheel trims, a bonnet 60 being shown in Fig 19. The bonnet 60 has a substrate 62 of plastic material initially formed in a mould in the same way as part 22 and an injected paint coating 25 preferably having an automotive Class A finish. A metallic finish for such components can be obtained by incorporating aluminium or mica particles flakes or platelets during the paint manufacturing process. Injection of a high viscosity fluid as obtained by the melted or softened paint 24 enables the flakes or platelets to be orientated in the correct plane.

The term powder paint used herein included paint in the form of granules, pellets or the like. The powder paint manufacturing process referred to herein includes a manufacturing process which results in the production of powder or in the production of paint sheet, pellets, granules or the like from which powder can be formed.

## Claims

1. A method of moulding by injection comprising providing an injection moulding machine (21), introducing into the injection moulding machine a coating material in the form of plastics paint (24) which includes a thermoplastic or thermosetting polymer, a colouring material, and an antioxidant, providing a mould (10), providing in the mould (10) a part (22;32;42;52) to be coated with the paint and causing the injection moulding machine (21) to inject the paint between the said part and an adjacent surface (14;114) whereby the paint (24) forms a coating on the surface of the part (22;32;42;52) to provide a finish, characterised by utilising the paint (24) as formed by a powder paint manufacturing process, introducing the paint into the injection moulding machine (21) and melting or softening the paint in the injection moulding machine (21) so as to bring the paint into a form suitable for injection.

2. A method according to Claim 1 characterised in that the paint (24) includes one or more substances selected from finely divided metallic materials, finely divided pearlescent materials and UV stabilizers.

3. A method according to Claim 1 or 2 characterised in that the paint includes at least one polymer compatible with the material from which the part is formed.

4. A method according to any of Claims 1 to 3 characterised by producing the said part (22) in the mould (10) by injecting into the mould a thermoplastics or thermosetting plastics material (17) and injecting the paint (24) after the plastics material (17) has at least partially solidified or cured.

5. A method according to any of claims 1 to 3 characterised by introducing an uncured thermosetting plastics material (30;35) into the mould (10) in sheet-like form or in a dough-like consistency and pressing the uncured thermosetting plastics material (30;35) in the mould to form the said part (32).

6. A method according to Claim 5 characterised by providing the mould (10) in at least two sections (12,13) and compressing the said uncured thermosetting plastics material (30;35) in the mould to form the said part (32) by urging the two mould sections (12,13) together.

7. A method according to Claim 4, 5 or 6 characterised by using heat from the mould (10) to assist curing of the thermosetting plastics material (17;30;35).

8. A method according to any of Claims 1 to 3 characterised by producing the said part (42) in the mould (10) by introducing into the mould a sheet of mouldable thermoplastics material (40) and pressing the sheet of mouldable thermoplastics material (40) in the mould to form the said part (42).

9. A method according to Claim 8 characterised by heating the sheet of thermoplastics material (40) prior to introducing the sheet into the mould (10) and allowing the sheet to solidify at least partially prior to injecting the paint (24) between the said part (42) and the adjacent surface (14;114).

10. A method according to Claim 8 or 9 characterised by providing the mould (10) in at least two sections (12,13) and pressing sheets of mouldable thermoplastics material (40) in the mould (10) to form the part (42) by urging the two mould sections (12,13) together.

11. A method according to Claim 1 or 2 characterised by providing the part in the mould as a metal part (50) onto which the paint (24) is injected.

12. A method according to Claim 11 characterised by working metal (50) in the mould (10) to form the said part (52) prior to injecting the paint (24) between the metal part (52) and the adjacent surface (14;114).

13. A method according to Claim 12 characterised by providing the mould (10) in at least two sections (12,13) and pressing the metal (50) in the mould (10) to form said metal part (52) by urging the two sections (12,13) together.

14. A method according to any preceding claim including providing the paint (24) as a material which has thermoplastic properties but is thermosetting and will pass through a plastic phase as a result of applying heat thereto in the injection moulding machine and injecting the paint (24) between the said part (22;32;42;52) and the adjacent surface (14;114) while in such a plastic phase.

15. A method according to Claim 14 characterised by using heat from the said surface (14;114) to assist curing of the paint (24).

16. A method according to Claim 14 or 15 including applying heat at least to the paint coating (25) to cure the coating in a post mould curing step.

17. A method according to any preceding claim characterised by permitting or causing sections (12,13) of the mould (10) to open slightly prior to injecting the paint (24) between the said part (32;42;52) and a surface of the mould which defines said adjacent surface.

18. A method according to Claim 17 characterised by permitting the mould parts (12,13) to open by relieving a clamping load (L) normally holding the two mould sections (12,13) together.

19. A method according to any of Claims 1 to 13 or to Claim 17 or 18 when appendant to any one of Claims 1 to 13 characterised in that the said part (22) is formed from a thermoplastic material and the paint includes a thermoplastic reversibly cross-linkable polymeric material.

20. A method according to Claim 19 in which the reversibly cross-linkable material is an ionomer.

21. A moulding made by a method according to any preceding claim.

22. A moulding according to Claim 21 having an automotive Class A finish provided by the paint (24).

23. A moulding according to Claim 21 or 22 in the form of a painted motor vehicle component (60).

## Patentansprüche

1. Spritzgußverfahren, bei dem man eine Spritzgießmaschine (21) bereitstellt, in die Spritzgießmaschine eine Beschichtungsmasse in Form von Kunststofflack (24), der ein thermoplastisches oder warmhärtendes Polymer, ein Farbmittel und ein Antioxidans enthält, einbringt, eine Form (10) bereitstellt, in der Form (10) ein mit dem Lack zu überziehendes Teil (22;32;42;52) bereitstellt und die Spritzgießmaschine (21) zum Einspritzen des Lacks zwischen dem Teil und einer benachbarten Fläche (14;114) veranlaßt, wobei der Lack (24) auf der Oberfläche des Teils (22;32;42;52) einen Überzug bildet, so daß eine Lackierung entsteht, dadurch gekennzeichnet, daß man einen wie bei einem Pulverlack-Herstellungsverfahren anfallenden Lack (24) verwendet, den Lack in die Spritzgießmaschine (21) einbringt und dort aufschmilzt oder erweicht, wodurch der Lack in eine für die Einspritzung geeignete Form gebracht wird.

2. Verfahren nach Anspruch 1, dadurch gekennzeichnet, daß man einen Lack (24) einsetzt, der eine oder mehrere, unter feinteiligen metallischen Stoffen, feinteiligen Perlglanzstoffen und UV-Stabilisatoren ausgewählte Substanzen enthält.

3. Verfahren nach Anspruch 1 oder 2, dadurch gekennzeichnet, daß man einen Lack einsetzt, der mindestens ein mit dem Material, aus dem das Teil besteht, verträgliches Polymer enthält.

4. Verfahren nach einem der Ansprüche 1 bis 3, dadurch gekennzeichnet, daß man das Teil (22) in der Form (10) herstellt, indem man in die Form ein thermoplastisches oder warmhärtendes Kunststoffmaterial (17) einspritzt und nach zumindest teilweiser Verfestigung oder Härtung des Kunststoffmaterials (17) den Lack (24) einspritzt.

5. Verfahren nach einem der Ansprüche 1 bis 3, dadurch gekennzeichnet, daß man in die Form (10) ein ungehärtetes warmhärtendes Kunststoffmaterial (30;35) in Form eines Flächengebildes oder mit teigartiger Konsistenz einbringt und das ungehärtete warmhärtende Kunststoffmaterial (30;35) in der Form zum Teil (32) verpreßt.

6. Verfahren nach Anspruch 5, dadurch gekennzeichnet, daß man die Form (10) in mindestens zwei Teilstücken (12,13) bereitstellt und das ungehärtete warmhärtende Kunststoffmaterial (30;35) in der Form zum Teil (32) verpreßt, indem man die beiden Formteilstücke (12,13) zusammendrückt.

7. Verfahren nach Anspruch 4, 5 oder 6, dadurch gekennzeichnet, daß man zur Unterstützung der Härtung des warmhärtenden Kunststoffmaterials (17;30;35) Wärme aus der Form (10) verwendet.

8. Verfahren nach einem der Ansprüche 1 bis 3, dadurch gekennzeichnet, daß man das Teil (42) in der Form (10) herstellt, indem man in die Form ein Flächengebilde aus formbarem thermoplastischem Material (40) einbringt und in der Form zum Teil (42) verpreßt.

9. Verfahren nach Anspruch 8, dadurch gekennzeichnet, daß man das Flächengebilde aus thermoplastischem Material (40) vor dem Einbringen in die Form (10) erwärmt und vor dem Einspritzen des Lacks (24) zwischen dem Teil (42) und der benachbarten Fläche (14;114) zumindest teilweise verfestigen läßt.

10. Verfahren nach Anspruch 8 oder 9, dadurch gekennzeichnet, daß man die Form (10) in mindestens zwei Teilstücken (12,13) bereitstellt und in der Form (10) Flächengebilde aus formbarem thermoplastischem Material (40) zum Teil (42) verpreßt, indem man die beiden Formteilstücke (12,13) zusammendrückt.

11. Verfahren nach Anspruch 1 oder 2, dadurch gekennzeichnet, daß man als Teil in der Form ein Metallteil (50) bereitstellt, auf das man den Lack (24) aufspritzt.

12. Verfahren nach Anspruch 11, dadurch gekennzeichnet, daß man vor dem Einspritzen des Lacks (24) zwischen dem Metallteil (52) und der benachbarten Fläche (14;114) in der Form (10) durch Bearbeitung von Metall (50) das Teil (52) formt.

13. Verfahren nach Anspruch 12, dadurch gekennzeichnet, daß man die Form (10) in mindestens zwei Teilstücken (12,13) bereitstellt und in der Form (10) das Metall (50) zum Metallteil (52) verpreßt, indem man die beiden Teilstücke (12,13) zusammendrückt.

14. Verfahren nach einem der vorhergehenden Ansprüche, bei dem man als Lack (24) ein Material bereitstellt, das thermoplastische Eigenschaften aufweist, aber warmhärtend ist und infolge der Zuführung von Wärme in der Spritzgießmaschine eine plastische Phase durchläuft, und den Lack (24) in einer derartigen plastischen Phase zwischen dem Teil (22;32;42;52) und der benachbarten Fläche (14;114) einspritzt.

15. Verfahren nach Anspruch 14, dadurch gekennzeichnet, daß man zur Unterstützung der Härtung des Lacks (24) Wärme von der Fläche (14;114) verwendet.

16. Verfahren nach Anspruch 14 oder 15, bei dem man zumindest den Lacküberzug (25) zur Härtung des Überzugs in einem nach der Formung erfolgenden Härtungsschritt erwärmt.

17. Verfahren nach einem der vorhergehenden Ansprüche, dadurch gekennzeichnet, daß man vor dem Einspritzen des Lacks (24) zwischen dem Teil (32;42;52) und einer die benachbarte Fläche definierende Fläche der Form Teilstücke (12,13) der Form (10) sich etwas öffnen läßt oder etwas öffnet.

18. Verfahren nach Anspruch 17, dadurch gekennzeichnet, daß man die Formteilstücke (12,13) sich öffnen läßt, indem man eine Klemmlast (L), die normalerweise die beiden Formteilstücke (12,13) zusammenhält, wegnimmt.

19. Verfahren nach einem der Ansprüche 1 bis 13 oder Anspruch 17 oder 18, sofern sie einem der Ansprüche 1 bis 13 zugeordnet sind, dadurch gekennzeichnet, daß man das Teil (22) aus einem thermoplastischen Material formt und einen Lack einsetzt, der ein thermoplastisches, reversibel vernetzbares polymeres Material enthält.

20. Verfahren nach Anspruch 19, bei dem man als reversibel vernetzbares Material ein Ionomer einsetzt.

21. Nach einem Verfahren gemäß einem der vorhergehenden Ansprüche hergestelltes Formteil.

22. Formteil nach Anspruch 21 mit einer durch den Lack (24) gelieferten Autolackierung der Klasse A.

23. Formteil nach Anspruch 21 oder 22 in Form eines lackierten Kraftfahrzeugbauteils (60).

## Revendications

1. Procédé de moulage par injection comprenant les étapes consistant à prévoir une machine de moulage par injection (21), introduire dans la machine de moulage par injection un matériau de revêtement sous la forme de peinture plastique (24) qui comprend un polymère thermoplastique ou thermodurcissable, une matière colorante, et un antioxydant, prévoir un moule (10), prévoir dans le moule (10) une pièce (22; 32; 42; 52) à revêtir avec la peinture et faire en sorte que la machine de moulage par injection (21) injecte la peinture entre ladite pièce et une surface adjacente (14; 114), ce par quoi la peinture (24) forme un revêtement sur la surface de la pièce (22; 32; 42; 52) pour fournir une finition, caractérisé par l'utilisation de la peinture (24) formée par un processus de fabrication de peinture pulvérulente, l'introduction de la peinture dans la machine de moulage par injection (21) et la fusion ou le ramollissement de la peinture dans la machine de moulage par injection (21) de manière à mettre la peinture sous une forme appropriée à l'injection.

2. Procédé selon la revendication 1, caractérisé en ce que la peinture (24) comprend une ou plusieurs substances choisies parmi des matières métalliques finement divisées, des matières nacrées finement divisées et des stabilisants aux UV.

3. Procédé selon la revendication 1 ou 2, caractérisé en ce que la peinture comprend au moins un polymère compatible avec le matériau à partir duquel la pièce est formée.

4. Procédé selon l'une quelconque des revendications 1 à 3, caractérisé par la production de ladite pièce (22) dans le moule (10) en injectant dans le moule un matériau plastique thermoplastique ou thermodurcissable (17) et en injectant la peinture (24) après que le matériau plastique (17) s'est solidifié ou a durci au moins partiellement.

5. Procédé selon l'une quelconque des revendications 1 à 3, caractérisé par l'introduction d'un matériau plastique thermodurcissable non durci (30; 35) dans le moule (10) en forme de feuille ou avec une consistance pâteuse et le pressage du matériau plastique thermodurcissable non durci (30; 35) dans le moule pour former ladite pièce (32).

6. Procédé selon la revendication 5, caractérisé par les étapes consistant à prévoir le moule (10) en au moins deux sections (12, 13) et à comprimer ledit matériau plastique thermodurcissable non durci (30; 35) dans le moule pour former ladite pièce (32) en poussant les deux sections (12, 13) du moule l'une contre l'autre.

7. Procédé selon la revendication 4, 5 ou 6, caractérisé par l'utilisation de chaleur provenant du moule (10) pour aider au durcissement du matériau plastique thermodurcissable (17; 30; 35).

8. Procédé selon l'une quelconque des revendications 1 à 3, caractérisé par la production de ladite pièce (42) dans le moule (10) en introduisant dans le moule une feuille de matériau thermoplastique moulable (40) et en pressant la feuille de matériau thermoplastique moulable (40) dans le moule pour former ladite pièce (42).

9. Procédé selon la revendication 8, caractérisé par les étapes consistant à chauffer la feuille de matériau thermoplastique (40) avant l'introduction de la feuille dans le moule (10) et à laisser la feuille se solidifier au moins partiellement avant l'injection de la peinture (24) entre ladite pièce (42) et la surface adjacente (14; 114).

10. Procédé selon la revendication 8 ou 9, caractérisé par les étapes consistant à prévoir le moule (10) en au moins deux sections (12, 13) et à presser des feuilles de matériau thermoplastique moulable (40) dans le moule (10) pour former la pièce (42) en poussant les deux sections (12, 13) du moule l'une contre l'autre.

11. Procédé selon la revendication 1 ou 2, caractérisé par l'étape consistant à prévoir la pièce dans le moule sous forme d'une pièce métallique (50) sur laquelle la peinture (24) est injectée.

12. Procédé selon la revendication 11, caractérisé par le travail du métal (50) dans le moule (10) pour former ladite pièce (52) avant l'injection de la peinture (24) entre la pièce métallique (52) et la surface adjacente (14; 114).

13. Procédé selon la revendication 12, caractérisé par les étapes consistant à prévoir le moule (10) en au moins deux sections (12, 13) et à presser le métal (50) dans le moule (10) pour former ladite pièce métallique (52) en poussant les deux sections (12, 13) l'une contre l'autre.

14. Procédé selon l'une quelconque des revendications précédentes, comprenant les étapes consistant à prévoir la peinture (24) sous forme d'un matériau qui a des propriétés thermoplastiques mais est thermodurcissable et passera par une phase plastique à la suite de l'application de chaleur à celui-ci dans la machine de moulage par injection, et à injecter la peinture (24) entre ladite pièce (22; 32; 42; 52) et la surface adjacente (14; 114) tout en étant dans une telle phase plastique.

15. Procédé selon la revendication 14, caractérisé par l'utilisation de chaleur provenant de ladite surface (14; 114) pour aider au durcissement de la peinture (24).

16. Procédé selon la revendication 14 ou 15, comprenant l'application de chaleur au moins au revêtement de peinture (25) pour durcir le revêtement dans une étape de durcissement après moulage.

17. Procédé selon l'une quelconque des revendications précédentes, caractérisé en ce que l'on permet ou fait en sorte que les sections (12, 13) du moule (10) s'ouvrent légèrement avant l'injection de la peinture (24) entre ladite pièce (32; 42; 52) et une surface du moule qui définit ladite surface adjacente.

18. Procédé selon la revendication 17, caractérisé en ce que l'on permet aux parties (12, 13) du moule de s'ouvrir en dégageant une charge de serrage (L) maintenant normalement les deux sections (12, 13) du moule l'une contre l'autre.

19. Procédé selon l'une quelconque des revendications 1 à 13 ou selon la revendication 17 ou 18, lorsqu'elle se rattache à l'une quelconque des revendications 1 à 13, caractérisé en ce que ladite pièce (22) est formée d'un matériau thermoplastique et la peinture comprend un matériau polymère thermoplastique réticulable de manière réversible.

20. Procédé selon la revendication 19, dans lequel le matériau réticulable de manière réversible est un ionomère.

21. Pièce moulée fabriquée par un procédé selon l'une quelconque des revendications précédentes.

22. Pièce moulée selon la revendication 21, ayant une finition automobile de classe A fournie par la peinture (24).

23. Pièce moulée selon la revendication 21 ou 22, sous la forme d'un composant de véhicule automobile peint (60).
